# EUROPÄISCHE PATENTSCHRIFT

(11) **EP 0 486 956 B1**
(45) Veröffentlichungstag und Bekanntmachung des Hinweises auf die Patenterteilung: **28.12.1994**
(21) Anmeldenummer: 91119493.4
(22) Anmeldetag: 15.11.1991
(51) Int. Cl.: E05D 11/10, H02B 1/06, H02G 3/14

(54) **Gehäuse, insbesondere zur Aufnahme von elektrischen oder elektronischen Bauelementen**
Box for electrical or electronic components
Boîtier pour composants électriques ou électroniques

(30) Priorität: 22.11.1990 DE 4037063
(43) Veröffentlichungstag der Anmeldung: 27.05.1992
(73) Patentinhaber: bopla Gehäuse Systeme GmbH, D-32257 Bünde (DE)
(72) Erfinder: Niehausmeier, Uwe, W-4986 Rödinghausen (DE)
(74) Vertreter: Thielking, Bodo, Dipl.-Ing.

(56) Entgegenhaltungen:
- EP-A- 0 202 565
- CA-A- 893 357
- CH-A- 403 003
- DE-A- 2 447 763
- GB-A- 801 919
- US-A- 2 744 654

## Beschreibung

Die Erfindung betrifft ein Gehäuse nach dem Oberbegriff des Anspruchs 1.

Bei einem bekannten Gehäuse dieser Art (US-A-2,744,654) ist das Verbindungselement eine Verbindungsschraube, welche zwei Scharnierhälften aufweist, die über einen gemeinsamen Gelenkstift miteinander verbunden sind, der quer zur Drehachsrichtung verläuft. Die bekannte Konstruktion erlaubt zwar ein Klappen der Gehäusehälften, wenn die Schwenkachsen benachbarter Scharnierschrauben miteinander fluchten, ein vollständiges Lösen der beiden Gehäuseteile voneinander ist jedoch sehr aufwendig. Hierzu muß die Schraube vollständig aus der sie aufnehmenden Mutter herausgedreht werden. Außerdem ist es möglich, daß die benachbarten Scharnierschrauben, welche gemeinsam das Klappgelenk bilden sollen, unterschiedlich weit aus ihrer Aufnahme herausgedreht sind mit der Folge, daß die beiden Schwenkachsen der beiden Scharnierschrauben nicht genau miteinander fluchten.

Es sind auch bereits sogenannte Knebelverschlüsse oder Bajonettverschlüsse bekannt, welche eine schnelle Verbindung zwischen Gehäuseoberteil und Gehäuseunterteil erlauben. Solche Knebelverschlüsse werden sowohl bei Gehäusen angewendet, deren Deckel auf das Basisteil aufgelegt werden, als auch bei Gehäusen, deren Deckel klappbar am Basisteil angelenkt sind. Bei klappbar am Basisteil angelenkten Deckeln werden dabei Scharniere zwischen den beiden Gehäuseteilen vorgesehen.

Ausgehend von diesem Stand der Technik liegt der Erfindung die Aufgabe zugrunde, eine Schwenkverbindung zwischen Ober- und Unterteil zu schaffen, bei der ein schnelles und einfaches Lösen der beiden Gehäuseteile voneinander möglich ist und die Schwenkachsen benachbarter Verbindungselemente in zusammengehörigen Schwenkpositionen stets miteinander fluchten.

Die Lösung dieser Aufgabe erfolgt erfindungsgemäß dadurch, daß die Gehäuseteile voneinander lösbar sind, wenn das Verbindungselement zwischen der ersten und der zweiten Schwenkachsenposition und hierzu um 45° verschwenkt liegt.

Bei einer bevorzugten ersten Ausführungsform weist das Verbindungselement einen quer zu seiner in Längsrichtung verlaufenden Schwenkachse sich erstreckenden Flansch auf, der eine erste Pfanne aufweist, die einen in Scharnierachsrichtung sich erstreckenden gehäusefesten Zapfen teilweise umgreift. Bei einer derartigen Ausführungsform wird das Scharnier durch das Verbindungselement und eins der Gehäuseteile gebildet.

Weitere bevorzugte Ausführungsformen der Erfindung sind in den Unteransprüchen beschrieben.

Das erfindungsgemäße Gehäuse erlaubt einen vollständigen Verzicht auf das Vorsehen eines Scharniers zwischen dem Gehäuseoberteil und dem Gehäuseunterteil. Durch das Verbindungselement und dessen Schwenkposition wird es möglich, unterschiedliche Funktionen des Gehäuses zu wählen. Dem Benutzer bleibt es also vorbehalten, bei Bedarf den Deckel klappbar anzulenken oder frei abzunehmen. Außerdem sind im klappbaren Anlenkzustand die Klappachsen frei wählbar.

Nachstehend werden zwei bevorzugte Ausführungsformen der Erfindung anhand der Zeichnung im einzelnen beschrieben. Es zeigen:
- Figur 1 -: eine perspektivische Explosionsdarstellung einer ersten Ausführungsform mit einem ersten Verbindungselement und den zugehörigen Bereichen des Gehäuseoberteils und Gehäuseunterteils,
- Figur 2 -: eine zu Figur 1 analoge Darstellung einer zweiten Ausführungsform.

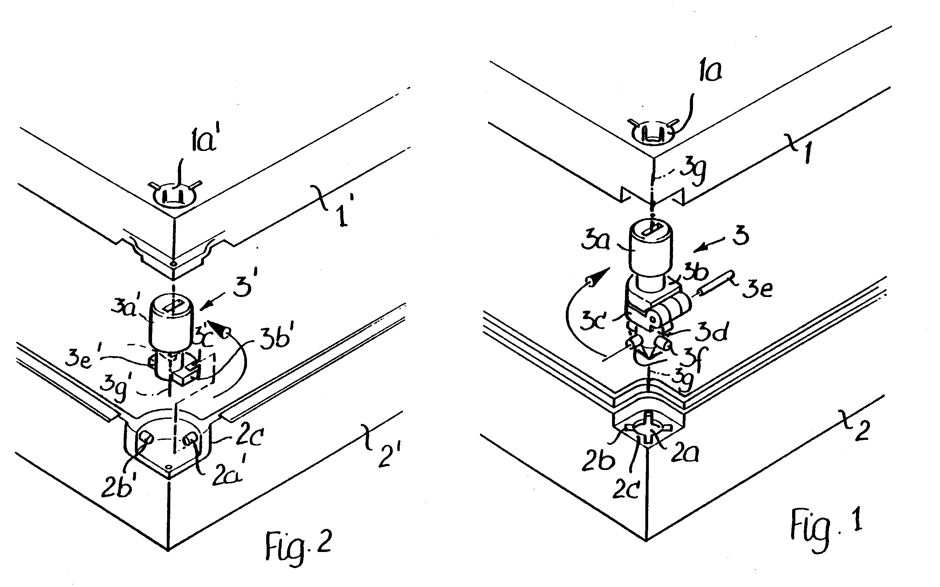

In den unterschiedlichen Ausführungsformen sind gleiche oder einander entsprechende Teile mit gleichen Bezugszeichen versehen. In Figur 2 sind zur Unterscheidung lediglich Hochstriche bei den Bezugszeichen vorgesehen.

### Zunächst zu Figur 1:

Die Zeichnung zeigt einen Eckbereich eines Unterteils 2 und eines Oberteils 1 eines Gehäuses. Das Oberteil 1 wird über das einteilig dargestellte,jedoch auch mehrteilig auszubildende Verbindungselement 3 mit dem Unterteil 2 verbunden.

Das Oberteil 1 besitzt im Eckbereich eine Einlaßöffnung 1a, in der im Zusammenbauzustand der Kopf 3a des Verbindungselements liegt. An den Kopfteil 3a des Verbindungselements schließen sich zwei Scharnierhälften 3b und 3c an, die über einen Gelenkstift 3e miteinander verbunden sind. An der Scharnierhälfte 3c sitzt der Schaft 3d, welcher quer zu der Schwenkachse 3g radial sich erstreckende stiftartige Vorsprünge 3f aufweist.

Im Unterteil 2 ist im Eckbereich ein Gehäuseteil 2c vorgesehen, der eine runde Durchgangsöffnung mit vier radial sich erweiternden Ausnehmungen 2b aufweist. Die Durchgangsöffnung 2a und die radialen Erweiterungen sind so ausgebildet, daß der Schaft 3d und die stiftartigen Vorsprünge in einer entsprechenden Verschwenklade durch diese Öffnungen hindurchtauchen können.

Das Verbindungselement 3 ist schwenkbar am Oberteil 1 befestigt. Zum Verbinden des Oberteils 1 mit dem Unterteil 2 wird das Verbindungselement 3 gegenüber der dargestellten Lage um 45° verschwenkt, so daß die stiftartigen Vorsprünge 3f mit den Ausnehmungen 2b fluchten. Anschließend wird das Verbindungselement in dieser Lage unter Überwindung einer Rückstell- oder Federkraft nach unten gedrückt und um 45° entweder in die in Figur 1 dargestellte Position verschwenkt oder in eine hierzu um 90° verdrehte Position. Je nach Verschwenklage ist das Oberteil 1 mit dem Unterteil 2 um eine Schwenkachse verbunden, die zu einer der beiden senkrecht zueinander verlaufenden Seiten parallel verläuft. Für ein Fixieren des Oberteils 1 gegenüber dem Unterteil 2 ist dafür zu sorgen, daß benachbarte Verbindungselemente 3 eine unterschiedliche, nicht der Freigabestellung entsprechende Verschwenkposition aufweisen.

Die erwähnte Rückstellkraft, die vor dem Verschwenken überwunden werden muß, kann in unterschiedlicher Weise erzeugt werden. Einerseits ist es möglich, die Auflage zwischen Oberteil 1 und Unterteil 2 elastisch zu gestalten, beispielsweise durch eine umlaufende Gummidichtung. Andererseits ist es auch möglich, an der Unterseite des Kopfes eine Druckfeder vorzusehen, die sich gegen den entsprechenden gegenüberliegenden Bereich der Öffnung 1a abstützt.

Bei der Ausführungsform gemäß Figur 2 besitzt das Oberteil 1' eine Einlaßöffnung 1a', in der der Kopf 3a' des Verbindungselements 3' liegt. An den Kopf 3a' schließt sich ein abgesetzter Schaft 3e' an, an dessen unterem Ende ein quer zur Schwenkachse 3g' sich erstreckender Flansch 3b' vorgesehen ist. Der Flansch 3b' besitzt zwei parallel zueinander verlaufende rinnenartige Pfannen 3c' und 3d'. Die beiden Pfannen 3c' und 3d' verlaufen parallel zueinander und sind seitlich gegenüber der Schwenkachse 3g' versetzt. In einer ersten Verschwenklage, welche der dargestellten Explosionszeichnung entspricht, untergreift die Pfanne 3c' einen ersten gehäusefesten Zapfen 2a' des Unterteils 2'. In dieser Position ist das Oberteil 1' schwenkbar um die Mittelachse des Zapfens 2a' am Unterteil 2' angelenkt. In einer hierzu um 90° verschwenkten Position untergreift die zweite Pfanne 3d' den zweiten gehäusefesten Zapfen 2b'.In dieser Schwenkposition ist das Oberteil 1' schwenkbar um diejenige Achse am Unterteil 2' angelenkt, die der Mittelachse des zweiten gehäusefesten Zapfens 2b' entspricht.

Damit eine Verschwenkbewegung möglich ist, ist auch bei dieser Ausführungsform eine Elastizität zwischen Oberteil und Unterteil bzw. zwischen dem Verbindungselement 3' und dem Unterteil 2' nötig. Diese Elastizität kann - ebenso wie bei der ersten Ausführungsform - beispielsweise durch die Elastizität der Dichtung zwischen Unterteil 2' und Oberteil 1' erzeugt werden. Es ist aber auch möglich, die Elastizität dadurch zu erzeugen, daß man unterhalb des Kopfes 3a' eine Druckfeder vorsieht, welche sich am entsprechenden Bereich der Einlaßöffnung 1a' und damit am Oberteil 1' abstützt. Eine solche nicht dargestellte Druckfeder drückt den Kopf 3a' stets nach oben. In gleicher Weise werden die Pfannen 3c' bzw. 3d' von unten jeweils gegen die zugehörigen Zapfen 2a' bzw. 2b' gedrückt.

Die Klappachsen sind bei allen Ausführungsformen vorzugsweise so angeordnet, daß sie in der Verlängerung der Außenflächen des Gehäuses liegen. Bei Figur 1 bedeutet dies, daß die Mittelachse des Gelenkstifts 3e innerhalb der Fortsetzung der Kontur des Unterteils 2 liegt, und zwar je nach Schwenklage entweder in der Fortsetzung der Längsseitenkontur oder der Querseitenkontur.

Bei der Ausführungsform gemäß Figur 2 liegt die Mittelachse des ersten gehäusefesten Zapfens 2a in der Verlängerung der Außenkontur der Längsseite des Unterteils 2'. Die Mittelachse des zweiten gehäusefesten Zapfens 2b' liegt in der Verlängerung der Außenkontur der Querseite des Unterteils 2'.

## Patentansprüche

1. Gehäuse, insbesondere zur Aufnahme von elektrischen oder elektronischen Bauelementen, bestehend aus einem Oberteil (1) und einem Unterteil (2) und einem Verbindungselement (3) zum lösbaren Verbinden der Gehäuseteile, das Scharnierteile aufweist, die über mindestens einen Gelenkstift (3e; 2a'; 2b') derart zusammengesetzt sind, daß die Gehäuseteile (1; 2) mittels jeweils zweier benachbarter unterschiedlicher Verbindungselemente wahlweise um eine erste oder um eine dazu um 90° verschwenkte zweite Schwenkachse verschwenkbar sind, wobei die beiden unterschiedlichen Schwenkachsen parallel zu unterschiedlichen Seiten des Gehäuses verlaufen,
dadurch gekennzeichnet,
daß die Gehäuseteile (1; 2) voneinander lösbar sind, wenn das Verbindungselement (3; 3') zwischen der ersten und der zweiten Schwenkachsenposition und hierzu um 45° verschwenkt liegt.

2. Gehäuse nach Anspruch 1,
dadurch gekennzeichnet,
daß das Verbindungselement (3') einen quer zu seiner in Längsrichtung verlaufenden Schwenkachse (3g') sich erstreckenden Flansch (3b') aufweist, der eine erste Pfanne (3c') aufweist, die einen in Scharnierachsrichtung sich erstreckenden gehäusefesten Zapfen (2a') teilweise umgreift.

3. Gehäuse nach Anspruch 2,
dadurch gekennzeichnet,
daß der Flansch (3b') eine zu der ersten Pfanne (3c') seitlich parallel versetzt angeordnete zweite Pfanne (3d') aufweist, die zum Untergreifen eines zweiten gehäusefesten Zapfens (2b') ausgebildet ist.

4. Gehäuse nach Anspruch 1,
dadurch gekennzeichnet,
daß das Verbindungselement (3) quer zu seiner Schwenkachse (3g) verlaufende stiftartige Vorsprünge (3f) aufweist, welche zum Hintergreifen eines Gehäuseteils (2c) in den Schwenkpositionen ausgebildet sind, welche der Schließposition und/oder der Klapposition entsprechen.

5. Gehäuse nach einem oder mehreren der Ansprüche 1 bis 4,
dadurch gekennzeichnet,
daß die Klappachsen des Scharniers in der Fortsetzung der Außenkontur eines Gehäuseteils (1; 2; 1'; 2') verlaufen.

## Claims

1. Housing, particularly for containing electrical or electronic components, comprising an upper part (1) and a lower part (2) and a connection element (3) for releasibly connecting the housing parts, which has hinge parts which are combined by at least one hinge pin (3e; 2a'; 2b') that the housing parts (1; 2) are relatively pivotable by means of two adjacent different connection elements optionally about a first or about a second pivot axis hinged at 90° thereto whereby the two different swing axes extend parallel to different sides of the housing,
characterised in that
the housing parts (1; 2) are releasable from one another, when the connection element (3; 3') lies between the first and the second swing axes positions and pivots at 45° hereto.

2. Housing according to Claim 1,
characterised in that
the connection element (3') has a flange (3b') extending transverse to its longitudinally extending pivot axis (3g'), which flange has a first socket (3c') which engages partially in a spigot (2a') fixed to the housing and extending in the direction of the hinge axis.

3. Housing according to Claim 2,
characterised in that
the flange (3b') has a second socket (3d') arranged laterally parallel offset to the first socket (3c'), which second socket is constructed to engage beneath a second spigot (2b') fixed to the housing.

4. Housing according to Claim 1,
characterised in that
the connection element (3) has pin-like projections (3f) extending transverse to its pivot axis (3g), which are constructed to engage behind a housing part (2c) in the swivel position, which correspond to the closed position and/or the open position.

5. Housing according to one or more of the claims 1 to 4,
characterised in that
the hinge axes of the hinges extends in the continuation of the outer shape of the housing part (1; 2; 1'; 2').

## Revendications

1. Boîtier destiné tout particulièrement à recevoir des éléments électriques ou électroniques, composé d'une partie supérieure (1) et d'une partie inférieure (2) et d'un élément de raccordement (3) pour relier de façon amovible les parties du boîtier et présentant des pièces de charnières, pouvant être assemblées à l'aide d'au moins cheville articulée (3e; 2a'; 2b') de sorte que les parties du boîtier (1; 2) puissent pivoter, au choix, autour d'un premier axe de pivotement ou d'un second axe contourné de 90 ° par rapport au premier, chacune à l'aide de deux éléments de raccordement différents, voisins,
caractérisé en ce que
les parties (1; 2) du boîtier peuvent être séparées l'une de l'autre quand l'élément de raccordement (3; 3') est situé entre la première et la deuxième position de pivotement et pivoté, de là, de 45 °.

2. Boîtier selon la revendication 1,
caractérisé en ce que
l'élément de raccordement (3') présente une flasque (3b') s'étendant transversalement par rapport au sens longitudinal de son axe de pivotement (3g'), laquelle flasque est équipée d'une première cavité (3c'), qui saisit partiellement un tourillon (2a') fixé au boîtier et s'étendant dans le sens de l'axe de la charnière.

3. Boîtier selon la revendication 2,
caractérisé en ce que
la flasque (3b') présente une deuxième cavité (3d'), décalée, sur le côté, parallèlement à la première cavité (3c') et conçue pour saisir, par dessous, un deuxième tourillon (2b') fixé au boîtier.

4. Boîtier selon la revendication 1,
caractérisé en ce que
l'élément de raccordement (3) présente des saillies (3f) disposées transversalement par rapport à son axe de pivotement (3g) et conçues pour saisir, par derrière, une partie (2c) du boîtier dans les positions de pivotement correspondant à la position de fermeture et/ou à la position rabattue.

5. Boîtier selon l'une ou plusieurs des revendications 1 à 4,
caractérisé en ce que
les axes rabattables de la charnière s'étendent en prolongement du contour extérieur d'une pièce (1; 2; 1'; 2') du boîtier.
